# FASCICULE DE BREVET EUROPEEN

(11) **EP 3 372 510 B1**
(45) Date de publication et mention de la délivrance du brevet: **24.04.2019**
(21) Numéro de dépôt: 18155914.7
(22) Date de dépôt: 09.02.2018
(51) Int. Cl.: B64F 1/36, H01R 13/66, H01R 27/02, H01R 31/06, H02H 3/22, H02H 9/04, H02J 7/00, H02J 7/02, B64D 45/02, H02G 13/00

(54) **SYSTÈME DE PROTECTION CONTRE LA FOUDRE POUR UN AÉRONEF**
BLITZSCHUTZSYSTEM FÜR LUFTFAHRZEUG
LIGHTNING PROTECTION SYSTEM FOR AN AIRCRAFT

(30) Priorité: 07.03.2017 FR 1751843
(43) Date de publication de la demande: 12.09.2018
(73) Titulaire: Airbus Operations S.A.S., 31060 Toulouse (FR)
(72) Inventeur: DELETOILLE, Didier, 31700 BLAGNAC (FR); FORGET, Frédéric, 32430 SAINT CRICQ (FR)
(74) Mandataire: Gicquel, Olivier Yves Gérard

(56) Documents cités:
- FR-A1- 3 028 101
- US-A1- 2010 197 159

## Description

L'invention concerne un système de protection d'un aéronef contre la foudre lors de son alimentation électrique au sol par un groupe électrogène.

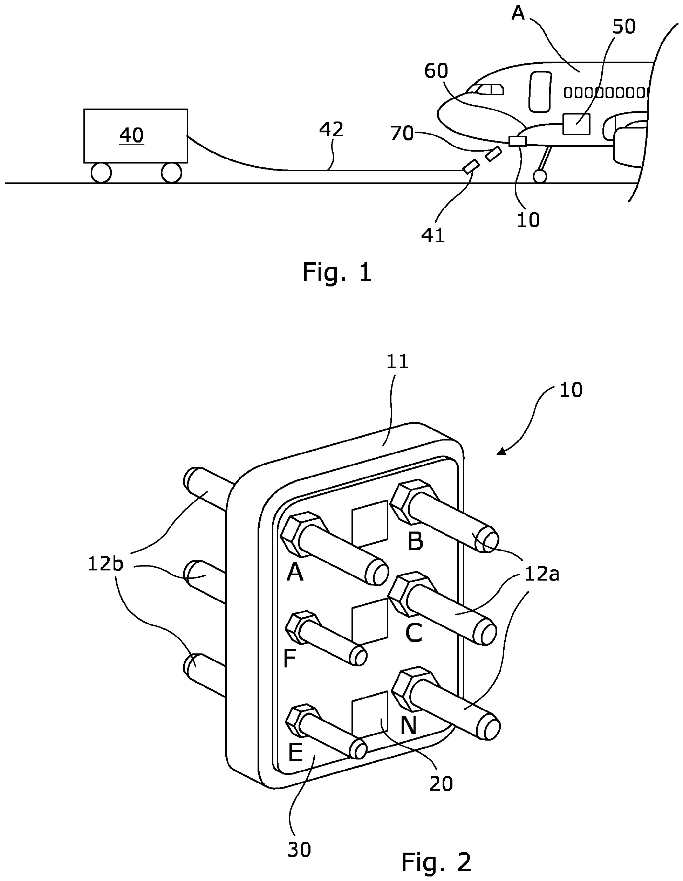

La figure 1 montre un aéronef A, à l'arrêt au sol, alimenté en électricité par un groupe électrogène 40 à l'aide d'un câble d'alimentation 42 comportant plusieurs conducteurs électriques et à l'extrémité duquel est prévu un connecteur d'extrémité 41 présentant un contact électrique pour chaque conducteur électrique. A titre d'exemple non limitatif, un tel câble d'alimentation 42 présente six conducteurs électriques et le connecteur d'extrémité 41 présente six contacts électriques.

Pour permettre la connexion avec le groupe électrogène 40, l'aéronef A présente un connecteur de connexion 10 présentant, pour chaque conducteur électrique du câble d'alimentation 42 du groupe électrogène 40, un contact électrique en aval duquel est connecté un conducteur embarqué 60 dans l'aéronef A et auquel est connecté au moins un élément électrique 50 de l'aéronef A.

La connexion du groupe électrogène 40 à l'aéronef A crée une boucle.

Lorsque la foudre frappe le sol au voisinage de l'aéronef A, une partie du champ magnétique induit par la foudre génère une chute de tension dans la boucle, créant un couplage inductif qui génère une surtension électrique dans le câble d'alimentation 42. Cette surtension électrique se propage jusqu'à l'aéronef A au risque de détériorer certains éléments électriques 50 de l'aéronef A. Chaque aéronef A peut présenter un seuil de tolérance à une surtension électrique spécifique.

Le brevet US 2010/0197159 A1 divulgue les caractéristiques du préambule de la revendication 1. Afin de garantir l'intégrité de l'aéronef, une solution présentée dans la demande de brevet publiée sous le numéro FR3028101, consiste à connecter un dispositif de sécurité 70 entre le connecteur d'extrémité 41 et le connecteur de connexion 10, ledit dispositif 70 étant adapté au seuil de tolérance à une surtension électrique propre à une catégorie d'aéronef considérée. Un tel dispositif 70 se présente généralement sous la forme d'un boîtier et comporte des moyens d'écrêtage. Lors de son utilisation, un agent aéroportuaire joint manuellement ledit boîtier au connecteur d'extrémité 41, puis connecte le tout au connecteur de connexion 10. Un tel dispositif 70 est généralement très lourd. Le travail des agents aéroportuaires en est dès lors pénalisé. De plus, lesdits dispositifs étant spécifiques à chaque catégorie d'aéronef, la manutention de tels dispositifs est complexe et il est possible que l'agent oublie de connecter un tel boitier de protection au connecteur d'extrémité 41. Enfin, à des fins de sécurité, des tels dispositifs 70 sont généralement scellés, empêchant ou limitant leur maintenance.

L'invention permet de répondre de manière particulièrement efficace à tout ou partie des inconvénients cités ci-dessus en proposant un système de protection contre la foudre lors de l'alimentation électrique par un groupe électrogène d'un aéronef.

A cette fin, l'invention concerne un aéronef comportant un fuselage et un connecteur de connexion pour permettre une connexion à un groupe électrogène, le connecteur étant fixé audit fuselage par l'intermédiaire d'un châssis, et comportant des contacts électriques mâles présentant une partie intérieure et une partie extérieure respectivement saillantes de part et d'autre du châssis, la partie extérieure étant agencée pour pouvoir être associée, en position d'utilisation, au groupe électrogène, la partie intérieure étant agencée pour coopérer avec des éléments électriques de l'aéronef au travers d'un conducteur embarqué, caractérisé en ce que le connecteur de connexion comporte en outre un système de protection contre la foudre, intercalé entre les contacts électriques mâle et les éléments électriques de l'aéronef, ledit système comprenant des moyens d'écrêtage prévus pour écrêter un signal électrique et un circuit imprimé présentant des pistes conductrices reliant la partie intérieure du contact électrique au moyen d'écrêtage.

Avantageusement, l'un des contacts électriques mâles est le neutre, et en ce qu'entre chaque partie intérieure d'un contact électrique mâle différent du neutre et la partie intérieure du contact électrique mâle correspondant au neutre, est disposé un moyen d'écrêtage.

Avantageusement, chaque moyen d'écrêtage est un ensemble d'au moins une diode montée en série entre un contact électrique mâle en dehors du neutre et le contact électrique neutre.

Afin de permettre la maintenance du système de protection d'un aéronef contre la foudre, un point de test est inséré entre les moyens d'écrêtage et le contact électrique neutre.

Pour permettre l'accès aux points de tests le châssis comporte des orifices assurant l'accès au point de test.

D'autres caractéristiques et avantages apparaîtront plus clairement à la lecture de la description qui suit, se rapportant à un exemple de réalisation donné à titre indicatif et non limitatif, et à l'examen des figures qui l'accompagnent, parmi lesquelles :
- la figure 1 montre un aéronef lors de son alimentation électrique au sol par un groupe électrogène, selon l'art antérieur,
- la figure 2 montre un mode de réalisation selon l'invention d'un système de protection pour un aéronef contre la foudre,
- la figure 3 montre un schéma électrique d'un moyen d'écrêtage selon un mode de réalisation de l'invention et
- la figure 4 montre un connecteur de connexion présentant des points de test.

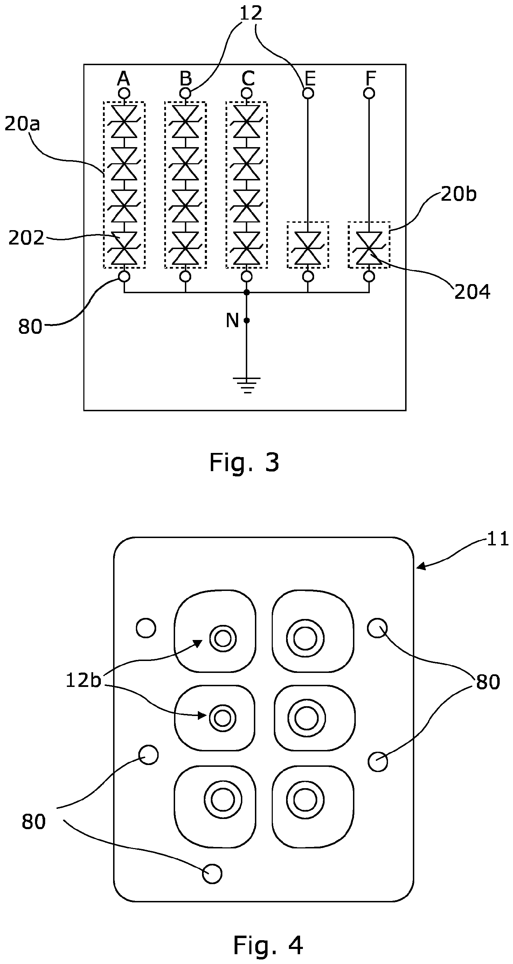

La figure 2 présente un connecteur de connexion 10 intégré au fuselage d'un aéronef A, permettant la connexion de l'aéronef A avec un groupe électrogène 40 comme illustré à la figure 1. Le connecteur de connexion 10 comporte, selon un mode de réalisation de l'invention, un système de protection contre la foudre. Ce connecteur de connexion 10 comporte un châssis 11 sur lequel est fixé des contacts électriques. A titre d'exemple non limitatif, le connecteur de connexion 10 représenté en figure 2 présente six contacts électriques mâles A, B, C, F, E et N. Selon un exemple représenté en figure 3, les contacts électriques A, B et C peuvent conduire un courant basse tension, par exemple de l'ordre de 115-200 V à 400Hz, les conducteurs électriques associés étant des phases. Les contacts électriques E et F peuvent conduire un courant très basse tension, par exemple de l'ordre de 28V à 0.5A, les conducteurs électriques associés étant généralement appelés « discrets de commande ». Le contact électrique N correspond au neutre.

Chaque contact électrique mâle A, B, C, F, E et N présente une partie intérieure 12a et une partie extérieure 12b respectivement saillantes de part et d'autre du châssis 11, tel que représenté en figure 2. La partie intérieure 12a est agencée pour pouvoir coopérer avec le conducteur embarqué 60 de l'aéronef A auquel est connecté au moins un élément électrique 50 de l'aéronef A. La partie extérieure 12b est agencée pour pouvoir coopérer de manière connue avec le connecteur d'extrémité 41 du groupe électrogène 40.

Le système de protection du connecteur 10 comporte des moyens d'écrêtage 20 prévus pour écrêter un signal électrique. Les moyens d'écrêtage 20 et la partie intérieure de chaque contact électrique A, B, C, E et F sont reliés aux moyens de pistes conductrices d'un circuit imprimé 30.

Selon un mode de réalisation préférentiel, un moyen d'écrêtage 20 est disposé entre la partie intérieure du contact électrique correspondant au neutre N et chaque partie intérieure d'un contact électrique différent du neutre, à savoir des contacts électriques A, B, C, E et F dans notre mode de réalisation.

Préférentiellement, chaque moyen d'écrêtage 20 est un ensemble de diode ou de plusieurs diodes montées en série entre un contact électrique mâle A, B, C, E et F et le contact électrique neutre N. Dans ce mode de réalisation, lorsque la tension dans le conducteur électrique 41 dépasse une tension limite prédéfinie de chaque diode, communément appelée « tension d'inversion », « tension d'écrêtage » ou « clamping voltage » en langue anglaise, lesdites diodes passent d'un état bloquant à un état conducteur et évacuent la surtension électrique vers le neutre N relié à la masse de l'aéronef A.

Pour chaque contact électrique A, B, C, E, F, en dehors du neutre N, les caractéristiques et le nombre M de diodes 202, 204 sont choisis en fonction des spécificités de l'aéronef et de groupe électrogène considérés.

Les caractéristiques d'une diode sont :
- le temps de transition entre l'état bloquant et l'état passant,
- l'intensité maximum de courant pouvant circuler dans la diode 202, 204, et
- la tension limite à partir de laquelle la diode devient conductrice (ou passante).

Les conditions d'utilisation sont :
- l'intensité du courant lors de la surtension,
- pour chaque conducteur électrique 41, la tension maximale circulant dans ledit conducteur électrique (avec de préférence une marge de 10 à 15% correspondant aux fluctuations classiques de la tension circulant dans un groupe électrogène 20), et
- le temps pendant lequel chaque élément électrique 50 de l'aéronef A à protéger peut accepter une surtension sans dommage.

Pour un conducteur électrique 41 et le conducteur embarqué 60 associé, chaque diode 202, 204 est d'abord choisie de manière à ce que son temps de transition soit inférieur au temps pendant lequel l'élément électrique 50 à protéger et électriquement connecté audit conducteur embarqué 60, peut accepter une surtension sans dommage, puis parmi ces diodes 202, 204, seules les diodes 202, 204 dont l'intensité maximum de courant pouvant y circuler est supérieure à l'intensité du courant lors de la surtension sont conservées.

Pour chaque modèle de diodes 202, 204 satisfaisant ces deux critères et pour chaque conducteur électrique, le nombre M de diodes est alors l'entier qui est juste supérieur au rapport entre la tension maximale circulant dans le conducteur électrique, et la tension limite de la diode 202, 204.

Dans un souci d'optimisation, la diode 202, 204 pour laquelle M est le plus petit est choisie.

Il est également possible de prendre en compte des critères additionnels. Par exemple, des diodes 202, 204 ayant une tension résiduelle plus faible seront préférées, ou des diodes 202, 204 pouvant dissiper une puissance plus importante seront préférées.

Selon un exemple de réalisation illustré en figure 3, le moyen d'écrêtage 20a est constitué de quatre diodes 202 identiques et montées en série et le moyen d'écrêtage 20b est constitué d'une diode 204.

Selon une variante de l'invention, les moyens d'écrêtage peuvent en outre consister en un ensemble de varistances ou de tout autre moyen permettant d'écrêter un signal électrique.

Préférentiellement, le système de protection du connecteur 10 est logé dans le volume du châssis 11. En variante un tel système peut consister en un boîtier logé dans le fuselage à proximité du connecteur de connexion 10.

Afin de faciliter la maintenance du système de protection contre la foudre selon l'invention, ledit système comporte des points de tests 80 entre les moyens d'écrêtage 20 et le contact électrique neutre N, permettant d'y apposer un moyen de mesure, tel qu'un multimètre par exemple. Le châssis 11 du connecteur de connexion 10 comporte dès lors des orifices, non représentés dans les figures, permettant l'accès depuis l'extérieur du châssis aux points de tests 80. En variante, les points de tests 80 peuvent consister en des contacts électriques situés sur la face du châssis 11 se situant en dehors du fuselage, tels que représentés en figure 4, afin d'y permettre l'apposition d'un multimètre. Un tel agencement de test permet avantageusement de s'assurer du bon fonctionnement de chaque moyen d'écrêtage du système de protection.

Avantageusement, on comprend à la lecture de la description du connecteur de connexion 10 pourvu d'un système de protection conforme à l'invention, que les agents aéroportuaires n'ont plus à se soucier d'intégrer un boîtier extérieur 70 au connecteur d'extrémité du groupe électrogène, tel que représenté en figure 1. L'aéronef A est protégé par cet arrangement de protection intégré au connecteur de connexion 10.

## Revendications

1. Aéronef (A) comportant un fuselage et un connecteur de connexion (10) pour permettre une connexion à un groupe électrogène (40) le connecteur de connexion (10) étant fixé audit fuselage par l'intermédiaire d'un châssis (11) et comportant des contacts électriques mâles (12) présentant une partie intérieure (12a) et une partie extérieure (12b) respectivement saillantes de part et d'autre du châssis (11), la partie extérieure (12b) étant agencée pour pouvoir être associée, en position d'utilisation, au groupe électrogène (40), la partie intérieure (12a) étant agencée pour coopérer avec des éléments électriques de l'aéronef (A) au travers d'un conducteur embarqué (60), **caractérisé en ce que** le connecteur de connexion (10) comporte en outre un système de protection contre la foudre intercalé entre les contacts électriques mâles (12a) et des éléments électriques (50) de l'aéronef (A), ledit système comprenant des moyens d'écrêtage (20) prévus pour écrêter un signal électrique et un circuit imprimé (30) présentant des pistes conductrices reliant la partie intérieure (12a) du contact électrique au moyen d'écrêtage (20).

2. Aéronef (A) selon la revendication précédente, pour lequel l'un des contacts électriques mâles est le neutre (N), et en ce qu'entre chaque partie intérieure (12a) d'un contact électrique mâle différent du neutre et la partie intérieure du contact électrique mâle correspondant au neutre, est disposé un moyen d'écrêtage (20).

3. Aéronef (A) selon la revendication 2, pour lequel chaque moyen d'écrêtage (20) est un ensemble d'au moins une diode montée en série entre un contact électrique mâle en dehors du neutre et le contact électrique neutre (N).

4. Aéronef (A) selon la revendication 2 ou 3, pour lequel un point de test (80) est inséré entre les moyens d'écrêtage (20) et le contact électrique neutre (N).

5. Aéronef (A) selon la revendication 4, pour lequel le châssis comporte un orifice assurant l'accès à chacun des points de test.

## Patentansprüche

1. Luftfahrzeug (A), welches einen Rumpf und einen Anschlussverbinder (10) zum Ermöglichen eines Anschlusses an einen Stromerzeuger (40) aufweist, wobei der Anschlussverbinder (10) über eine Fassung (11) am Rumpf befestigt ist und elektrische Stiftkontakte (12) aufweist, die einen inneren Teil (12a) und einen äußeren Teil (12b) aufweisen, die auf der einen bzw. anderen Seite der Fassung (11) vorstehen, wobei der äußere Teil (12b) dafür ausgelegt ist, in der Verwendungsposition mit dem Stromerzeuger (40) verbunden zu werden, wobei der innere Teil (12a) dafür ausgelegt ist, über einen an Bord befindlichen Leiter (60) mit elektrischen Elementen des Luftfahrzeugs (A) zusammenzuwirken, **dadurch gekennzeichnet, dass** der Anschlussverbinder (10) außerdem ein Blitzschutzsystem aufweist, das zwischen den elektrischen Stiftkontakten (12a) und elektrischen Elementen (50) des Luftfahrzeugs (A) angeordnet ist, wobei dieses System Mittel zur Spitzenbeschneidung (20), die dafür vorgesehen sind, ein elektrisches Signal zu beschneiden, und eine Leiterplatte (30), die Leiterbahnen aufweist, die den inneren Teil (12a) des elektrischen Kontakts mit dem Mittel zur Spitzenbeschneidung (20) verbinden, umfasst.

2. Luftfahrzeugs (A) nach dem vorhergehenden Anspruch, wobei einer der elektrischen Stiftkontakte der Neutralleiter (N) ist, und dadurch, dass zwischen jedem inneren Teil (12a) eines von dem Neutralleiter verschiedenen elektrischen Stiftkontakts und dem inneren Teil des dem Neutralleiter entsprechenden elektrischen Stiftkontakts ein Mittel zur Spitzenbeschneidung (20) angeordnet ist.

3. Luftfahrzeugs (A) nach Anspruch 2, wobei jedes Mittel zur Spitzenbeschneidung (20) eine Anordnung aus wenigstens einer Diode ist, die zwischen einem elektrischen Stiftkontakt außerhalb des Neutralleiters und dem neutralen elektrischen Kontakt (N) in Reihe geschaltet ist.

4. Luftfahrzeugs (A) nach Anspruch 2 oder 3, wobei zwischen den Mitteln zur Spitzenbeschneidung (20) und dem neutralen elektrischen Kontakt (N) ein Prüfpunkt (80) eingefügt ist.

5. Luftfahrzeugs (A) nach Anspruch 4, wobei die Fassung eine Öffnung aufweist, die den Zugang zu jedem der Prüfpunkte gewährleistet.

## Claims

1. Aircraft (A) comprising a fuselage and a connecting connector (10) to allow a connection to a generator set (40), the connecting connector (10) being fixed to said fuselage via a frame (11) and comprising male electrical contacts (12) having an internal part (12a) and an external part (12b) respectively protruding on either side of the frame (11), the external part (12b) being arranged to be able to be associated, in position of use, with the generator set (40), the internal part (12a) being arranged to cooperate with electrical elements of the aircraft (A) through an embedded conductor (60), **characterized in that** the connecting connector (10) further comprises a lightning protection system inserted between the male electrical contacts (12a) and electrical elements (50) of the aircraft (A), said system comprising peak-clipping means (20) designed to clip an electrical signal and a printed circuit (30) having conductive tracks linking the internal part (12a) of the electrical contact to the peak-clipping means (20).

2. Aircraft (A) according to the preceding claim, for which one of the male electrical contacts is the neutral (N), and in that, between each internal part (12a) of a male electrical contact other than the neutral and the internal part of the male electrical contact corresponding to the neutral, there is a peak-clipping means (20).

3. Aircraft (A) according to Claim 2, for which each peak-clipping means (20) is an assembly of at least one diode mounted in series between a male electrical contact other than the neutral and the neutral electrical contact (N).

4. Aircraft (A) according to Claim 2 or 3, for which a test point (80) is inserted between the peak-clipping means (20) and the neutral electrical contact (N).

5. Aircraft (A) according to Claim 4, for which the frame comprises an orifice ensuring access to each of the test points.
